# EUROPÄISCHE PATENTSCHRIFT

(11) **EP 3 109 102 B1**
(45) Veröffentlichungstag und Bekanntmachung des Hinweises auf die Patenterteilung: **04.09.2019**
(21) Anmeldenummer: 15173201.3
(22) Anmeldetag: 22.06.2015
(51) Int. Cl.: B60S 1/08, B08B 1/00, B60S 1/56

(54) **LINSENREINIGUNG MIT BIEGEAKTUATOR**
LENS CLEANING WITH FLEXURAL ACTUATOR
NETTOYAGE DE LENTILLE A L'AIDE D'UN ACTIONNEUR A FLEXION

(43) Veröffentlichungstag der Anmeldung: 28.12.2016
(73) Patentinhaber: SMR Patents S.à.r.l., 2453 Luxembourg (LU)
(72) Erfinder: Herrmann, Andreas, 71364 Winnenden-Baach (DE)
(74) Vertreter: Weber-Bruls, Dorothée

(56) Entgegenhaltungen:
- DE-A1-102005 005 504
- DE-A1-102013 213 415
- US-A1- 2003 057 909
- US-A1- 2010 065 232

## Beschreibung

### GEBIET DER ERFINDUNG

Die Erfindung betrifft eine Reinigungsvorrichtung zur Reinigung einer Optikeinrichtung, insbesondere eine Linse und/oder andere transparente oder teiltransparente Teile einer Optikeinrichtung, deren Qualität beispielsweise durch Verschmutzen oder Beschlag durch Feuchtigkeit beeinträchtigt werden kann.

### HINTERGRUND DER ERFINDUNG

Es werden in zunehmendem Maße Assistenzsysteme in Fahrzeugen eingesetzt, die beispielsweise die Übersichtlichkeit verbessern, wie beim rückwärts Einparken, oder aber andere Aufgaben übernehmen oder kontrollieren, beispielsweise Erkennung von Fahrbahnmarkierungen oder Verkehrsschildern. Oft benötigen die Assistenzsysteme Kameras mit entsprechenden Optikeinrichtungen, wobei das optisch erfasste Bild für die Kamera vergrößert, verkleinert und/oder bewusst verzerrt dargestellt werden kann, beispielsweise um einen bestimmten Bereich auf eine Kfz-Rückfahrkamera abzubilden und/oder das Kamerasignal elektronisch ausgewertet wird, um beispielsweise Fahrstreifen oder Verkehrsschildinformationen zu detektieren und auszuwerten.

Solche Optikeinrichtungen können beschlagen oder verschmutzen, weshalb eine Reinigungsvorrichtung nötig ist, um die Qualität der Optik und damit die Funktion des entsprechenden Assistenzsystems gewährleisten zu können.

Optikeinrichtungen können zumindest teilweise gekrümmte Oberfläche haben, die mit herkömmlichen Wischelementen nicht oder nur unzureichend gereinigt werden können. Weiter weisen herkömmliche Reinigungssysteme in der Regel Stellmotoren und Getriebeelemente auf, die eine Reinigungsanlage aufwändig, teuer in der Herstellung und wartungsanfällig machen.

Aus der DE 10 2005 005 504 A1 ist eine Scheibenwischvorrichtung, insbesondere für ein Kraftfahrzeug, bekannt, bei dem ein Wischblatt, das zur Beseitung von Feuchtigkeit und/oder Schmutz auf einer Scheibe bewegbar ist, durch ein Bewegungsmittel angetrieben wird, welches ein elektroaktives Polymer umfasst.

Aufgabe der Erfindung ist es eine Reinigungsvorrichtung bereitzustellen, die kostengünstig in der Herstellung ist, wartungsarm arbeitet und vorzugsweise auch gekrümmte Oberflächen ausreichend reinigen kann.

### ZUSAMMENFASSUNG DER ERFINDUNG

Die Aufgabe wird durch eine Reinigungsvorrichtung zur Reinigung einer Optikeinrichtung, insbesondere eines Kraftfahrzeugs, gemäß Anspruch 1 gelöst. Bevorzugte erfindungsgemäße Reinigungsvorrichtungen sind in den Ansprüchen 1 bis 6 beschrieben.

Die erfindungsgemäße Reinigungsvorrichtung hat mindestens zwei Reinigungseinheiten und mindestens einen Halter, an dem die Reinigungseinheiten angeordnet sind. Jede Reinigungseinheit hat einen Antriebsteil und einen Reinigungsteil, wobei der Antriebsteil ein aktives Material, vorzugsweise ein elektroaktives Polymer oder ähnliche Materialien, aufweist und den Reinigungsteil zumindest teilweise bewegen kann. Das Material des Reinigungsteils kann eine Oberfläche aufweisen, die entsprechenden Feuchtigkeitsbeschlag oder andere Verschmutzungen aufnimmt und/oder wegwischt. Der Reinigungsteil kann auch auf dem Antriebsteil angeordnet sein oder auch mit diesem einstückig ausgebildet sein. Der Halter, an dem die Reinigungseinheiten angeordnet sind, ist zwischen einer Arbeitsposition, in der die Reinigungseinheiten so zur Optikeinrichtung positioniert sind, dass die Reinigungsteile durch den Antriebsteil über eine zu reinigende Oberfläche der Optikeinrichtung bewegt werden können, und einer Ruheposition, in der die Reinigungseinheiten entfernt von der Optikeinrichtung positioniert sind, bewegbar. Beim Einsatz von mehreren Haltern kann zumindest einer der Halter zwischen einer Arbeitsposition und einer Ruheposition bewegt werden. Der Halter kann mittels eines Stellmotors mit oder ohne Getriebeteile oder mit einem aktiven Material zwischen der Arbeitsposition und der Ruheposition bewegt werden. Weiter kann der Halter selbst zumindest teilweise ein aktives Material aufweisen und so die Positionierung der Reinigungsteile und/oder die Bewegung der Reinigungsteile unterstützen oder übernehmen.

Die Reinigungsvorrichtung ist so ausgebildet, dass jedes Reinigungsteil der Reinigungseinheiten über eine ihr zugewiesene Teilfläche der zu reinigenden Oberfläche bewegt wird, wobei sich die Teilflächen zumindest teilweise überlappen können. So kann auch eine Reinigung von komplexen Oberflächen, beispielsweise mit einer Krümmung, erreicht werden.

Optional kann der Antriebsteil den Reinigungsteil entlang und/oder quer der Längsachse der entsprechenden Reinigungseinheit bewegen. Der in der Arbeitsposition mit der Optikeinrichtung im Kontakt stehende Reinigungsteil kann eine lineare Hin-und-her-Bewegung ausführen und/oder kann sich auf einer kurvigen Bahn oder in Kreisen bewegen. Dies kann durch eine Krümmung des Antriebsteils erreicht werden, wobei sich der gekrümmte Teil vertikal oder horizontal zu einer gedachten Oberfläche der Optikeinrichtung bewegt. Verschiedene Reinigungseinheiten können ihren jeweiligen Reinigungsteil verschieden bewegen, d.h. auf verschiedenen Bahnen und/oder in verschiedene Richtungen und/oder zu verschiedenen Zeiten. Es kann auch eine gezielte Reinigung vorgenommen werden, die die Optikeinrichtung und eine nachgeschaltete Kamera verwendet, um Art und/oder Grad und/oder Position der Verschmutzung festzustellen und gezielt zu beseitigen.

Der Reinigungsteil kann getrennt vom Antriebsteil sein. Alternativ kann der Reinigungsteil auf oder an dem Antriebsteil angeordnet sein. Beispielsweise können Reinigungsborsten zumindest teilweise am Antriebsteil ausgebildet sein. Der Reinigungsteil kann an einem vom Halter beanstandeten Ende einer Reinigungseinheit angeordnet werden. Die Reinigungsteile können auch verschiedene Materialien für verschiedene Reinigungsaktionen aufweisen, beispielsweise einen weichen Filz um einen Beschlag oder leichte Verschmutzung zu beseitigen und Kunststoffborsten und/oder Wischlippen um Tropfen oder gröbere Verschmutzungen zu beseitigen.

Die zu reinigende Optikeinrichtung kann eine gekrümmte Oberfläche aufweisen, wobei die Reinigungseinheiten in der Arbeitsposition zumindest teilweise so positioniert und bewegbar sind, dass die Oberfläche auch in gekrümmten Bereichen gereinigt werden kann.

Die Erfindung betrifft weiter ein Fahrassistenzsystem mit einer Optikeinrichtung und einer Reinigungsvorrichtung gemäß der Erfindung. Als Fahrassistenzsystem wird jedes System verstanden, das Aufgaben kontrollieren und/oder erleichtern und/oder übernehmen kann. Derzeit gängige Fahrassistenzsysteme sind beispielsweise Spurassistent, Bremsassistent, Scheinwerferabblendassistent, Notbremsassistent, Einparkassistent, Verkehrszeichenerkennungsassistent, Nachtsichtassistent, Abstandsregelungsassistent, usw.

Das Fahrassistenzsystem kann eine Steuereinheit zur Aktivierung des Reinigungsvorgangs aufweisen. Die Aktivierung kann aufgrund manueller Auslösung oder automatischer Auslösung, beispielsweise aufgrund einer Schwellwertüberschreitung bzw. Schwellwertunterschreitung, erfolgen. Eine manuelle Auslösung kann durch den Benutzer erfolgen. Eine automatische Auslösung kann bei Aktivierung des Assistenzsystems und/oder in bestimmten Intervallen erfolgen. Bei einer automatischen Auslösung basierend auf einem Schwellwert kann dieser so eingestellt sein, dass ab einem bestimmten Verschmutzungsgrad der Optik, bei dem das Fahrassistenzsystem nicht mehr einwandfrei arbeiten kann, eine Reinigungsaktion ausgelöst wird.

Weiter betrifft die Erfindung einen Kraftfahrzeugrückspiegel mit einer Optik und einer Reinigungsvorrichtung gemäß der Erfindung.

### KURZE BESCHREIBUNG DER ZEICHNUNGEN

Die folgenden schematischen Zeichnungen stellen beispielhafte Ausführungsformen dar, um das Verständnis der Erfindung zu verbessern, wobei
- Figur 1: eine schematische Querschnittsansicht einer erfindungsgemäßen Reinigungsvorrichtung;
- Figuren 2a, 2b: schematische Ansichten einer Reinigungseinheit;
- Figur 3: eine schematische Draufsicht einer erfindungsgemäßen Reinigungsvorrichtung in einer Arbeitsposition; und
- Figur 4: eine schematische Darstellung von verschiedenen Teilflächen einer zu reinigenden Oberfläche zeigt.

### DETAILLIERTE BESCHREIBUNG DER ERFINDUNG

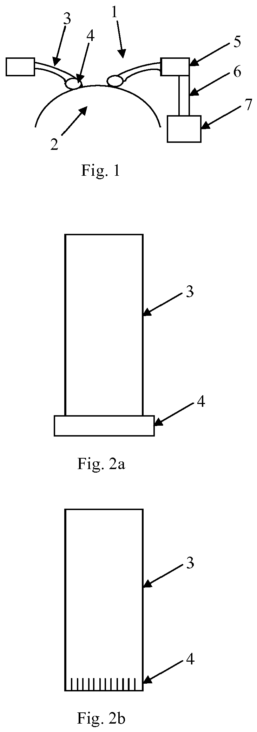

Figur 1 zeigt eine schematische Querschnittsansicht einer erfindungsgemäßen Reinigungsvorrichtung. Reinigungseinheiten 1 haben einen Antriebsteil 3 und einen Reinigungsteil 4. Eine Optikeinrichtung 2 kann gereinigt werden, indem der Antriebsteil 3 den Reinigungsteil 4 über bestimmte Bereiche der Optikeinrichtung 2 bewegt. Der Antriebsteil 3 weist dazu ein aktives Material, insbesondere ein elektroaktives Polymer auf. Ähnlich einem Muskel kann der Antriebsteil 3 so verformt werden, dass der Reinigungsteil 4 eine Bewegung auf einer zu reinigenden Fläche, insbesondere einer vorbestimmten Teilfläche, ausführt. Durch das Zusammenwirken mehrerer Reinigungseinheiten 1 kann so ein effektives Reinigungsergebnis erzielt werden. Dies ist insbesondere auch für gekrümmte und/oder komplex geformte Oberflächen zutreffend.

Die Reinigungseinheiten 1 können an einem Halter 5 angeordnet sein, wobei die Reinigungseinheiten 1 auch über mehrere Halter 5 verteilt sein können, d.h. zwei, drei, vier, fünf oder mehr Halter 5 weisen jeweils eine, zwei, drei, vier, fünf oder mehr Reinigungseinheiten 1 auf.

Der Halter 5 kann über eine Führung 6 mit einem Positionsantrieb 7 verbunden sein. So kann der Halter 5 und damit die Reinigungseinheit 1 zwischen einer Arbeitsposition, wie in Figur 1 dargestellt, und einer Ruheposition (nicht dargestellt) bewegt werden. Die Ruheposition ist nicht von spezieller Bedeutung für die vorliegende Erfindung, sollte jedoch so sein, dass die Optikeinrichtung 2 nicht in ihrer Funktion eingeschränkt ist. Weiter kann die Ruheposition so sein, dass zumindest die Reinigungsteile 4 und/oder auch weitere Teile der Reinigungsvorrichtung vor Verschmutzung geschützt werden. Beim Einsatz mehrerer Halter 5 können alle oder auch nur ein Teil der Halter 5 zwischen einer Arbeitsposition und einer Ruheposition bewegt werden. Auch können die Halter 5 getrennt voneinander bewegt werden, beispielsweise für verschiedene Reinigungsaktionen, wobei die Reinigungsteile 4 mit für die Verschmutzung angepassten Materialien eingesetzt werden können.

Figuren 2a und 2b zeigen beispielhafte, schematische Ansichten einer Reinigungseinheit 1. Bei der Reinigungseinheit 1 gemäß Figur 2a ist ein Reinigungsteil 4 am vom Halter 5 beabstandeten Ende des Antriebsteils 3 angeordnet. Der Reinigungsteil 4 kann auch zumindest teilweise auf dem Antriebsteil 3 angeordnet sein. Der Reinigungsteil 4 kann auch direkt durch einen Teil des Antriebsteils 3 gebildet werden. Der Reinigungsteil 4 kann Reinigungsborsten oder einen Filz oder andrere geeignete Reinigungsmaterialien aufweisen. Die für den Reinigungsteil 4 verwendeten Reinigungsmaterialien sollten auf die zu reinigende Optikeinrichtung 2 abgestimmt sein, d.h. auf das Material der Optikeinrichtung 2 und/oder auf die zu reinigende Fläche und/oder auf die zu erwartende Verschmutzung bzw. Beschlag. Bei der Reinigungseinheit 1 gemäß Figur 2b wird der Reinigungsteil 4 durch Reinigungsborsten gebildet, die am vom Halter 5 beabstandeten Ende des Antriebsteils 3 angeordnet sind. In einer erfindungsgemäßen Reinigungsvorrichtung können mehrere Reinigungseinheiten 1 eingesetzt werden oder verschiedene Reinigungseinheiten 1, beispielsweise mit Reinigungsteilen 4 mit verschiedenen Materialien.

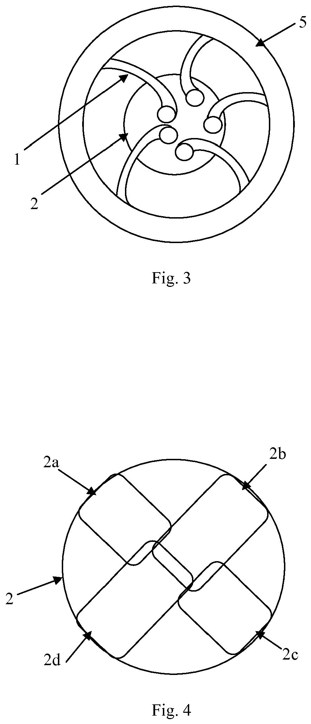

Figur 3 zeigt eine schematische Draufsicht einer erfindungsgemäßen Reinigungsvorrichtung in einer Arbeitsposition. Der Halter 5, an dem die Reinigungseinheiten 1 angeordnet sind, ist ringförmig ausgebildet. Die Reinigungseinheiten 1 sind so ausgestaltet, dass die Reinigungsteile 4 in der Arbeitsposition bestimmte Teilbereiche der zu reinigenden Oberfläche der Optikeinrichtung 2 berühren und beim Reinigungsvorgang entsprechende Bewegungen ausführen, um einen entsprechenden Teilbereich zu reinigen. Der Halter 5 kann auch aus zwei oder mehreren Teilen gebildet werden, an denen jeweils eine oder mehrere Reinigungseinheiten 1 angeordnet sind. Die Anordnung der Reinigungsteile 4 an der Optikeinrichtung 2, so dass eine Reinigung erfolgen kann, kann durch entsprechende Positionierung des Halters 5 und/oder entsprechende Positionierung der Reinigungseinheiten 1 am Halter 5 und/oder entsprechende Steuerung der Antriebsteile 3 erfolgen. Beispielsweise können bereits durch das Bewegen des Halters 5 von der Ruheposition in die Arbeitsposition die Reinigungsteile 4 zumindest teilweise in eine Position gebracht werden, von der aus die Reinigungsbewegung starten kann.

Wie in Figur 4 schematisch dargestellt, können die Reinigungsteile 4 verschiedene Teilflächen der Optikeinrichtung 2 reinigen. Die Teilflächen können sich dabei zumindest teilweise, beispielsweise an den Randbereichen, mehr oder weniger überschneiden. Figur 4 zeigt der Übersichtlichkeit halber nur wenige Teilbereiche, die nicht die gesamte Oberfläche reinigen. Vorzugsweise wird die gesamte bzw. optisch benötigte Oberfläche der Optikeinrichtung 2 gereinigt. Dazu können zwei, drei, vier, fünf, sechs, sieben oder mehrere Reinigungseinheiten 1 verwendet werden, wobei jede Reinigungseinheit 1 einen Teilbereich reinigen kann. Die Reinigungseinheiten 1 können sich unterschiedlich und zeitlich und/oder räumlich so versetzt voneinander bewegen, dass es zu keinen Kollisionen kommt. So können die für die Teilbereiche 2a bis 2d zuständigen Reinigungselemente 4 so bewegt werden, dass niemals zwei Reinigungselemente 4 gleichzeitig den am weitesten vom Rand der Optikeinrichtung 2 entfernten Bereich reinigen, um eine Kollision in Überschneidungsbereichen zu vermeiden. Die Reinigungseinheiten 1 können auch so ausgestaltet sein, dass eine Kollision von einigen oder mehreren oder allen Reinigungsteilen 4 zumindest teilweise erlaubt wird. Die Reinigungseinheiten 1 sind vorzugsweise flexibel, so dass eine Kollision zu keinem Schaden oder Fehler beim aktuellen oder folgenden Reinigungsvorgängen führt.

### Bezugszeichenliste

- 1: Reinigungseinheit
- 2: Optikeinrichtung
- 2a-d: Teilbereiche der Oberfläche der Optikeinrichtung
- 3: Antriebsteil
- 4: Reinigungsteil
- 5: Halter
- 6: Führung
- 7: Positionsantrieb

## Patentansprüche

1. Reinigungsvorrichtung zur Reinigung einer Optikeinrichtung (2) eines Kraftfahrzeugs, wobei
die zu reinigende Optikeinrichtung (2) eine gekrümmte Oberfläche aufweist,
zumindest zwei Reinigungseinheiten (1) von der Reinigungsvorrichtung umfasst sind, die in einer Arbeitsposition so positioniert und bewegbar sind, dass die Oberfläche auch in gekrümmten Bereichen gereinigt werden kann, indem
jede Reinigungseinheit (1) einen Antriebsteil (3) und einen Reinigungsteil (4) hat, wobei der Antriebsteil (3) ein elektroaktives Polymer aufweist und den Reinigungsteil (4) zumindest teilweise bewegen kann;
mindestens ein Halter (5) von der Reinigungsvorrichtung umfasst ist, an dem die Reinigungseinheiten (1) angeordnet sind, wobei der Halter (5) zwischen einer Arbeitsposition, in der die Reinigungseinheiten (1) so zur Optikeinrichtung (2) positioniert sind, dass die Reinigungsteile (4) durch die Antriebsteile (3) über die zu reinigende Oberfläche der Optikeinrichtung (2) bewegt werden können, und einer Ruheposition, in der die Reinigungseinheiten (1) entfernt von der Optikeinrichtung (2) positioniert sind, bewegbar ist, und der Halter (5) ringförmig ausgebildet ist; und die Reinigungsvorrichtung so ausgebildet ist, dass jedes Reinigungsteil (4) der Reinigungseinheiten (1) über eine ihr zugewiesene Teilfläche (2a-d) der zu reinigenden Oberfläche bewegt wird, wobei sich die Teilflächen (2a-d) zumindest teilweise überlappen können.

2. Reinigungsvorrichtung nach Anspruch 1, wobei jeder Antriebsteil (3) den entsprechenden Reinigungsteil (4) entlang und/oder quer der Längsachse der Reinigungseinheit (1) bewegt.

3. Reinigungsvorrichtung nach mindestens einem der vorhergehenden Ansprüche, wobei der Reinigungsteil (4) Reinigungsborsten, insbesondere Kunststoffborsten, weichen Filz und/oder Wischlippen aufweist.

4. Reinigungsvorrichtung nach mindestens einem der vorhergehenden Ansprüche, wobei der Reinigungsteil (4) mindestens an einem vom Halter (5) beanstandeten Ende einer Reinigungseinheit (1) angeordnet ist.

5. Reinigungsvorrichtung nach mindestens einem der vorhergehenden Ansprüche, wobei der Halter (5) aus zwei oder mehr Teilen ausgebildet ist.

6. Reinigungsvorrichtung nach mindestens einem der vorhergehenden Ansprüche, wobei der Halter (5) selbst zumindest teilweise ein aktives Material aufweist und so die Positionierung der Reinigungsteile (4) und/oder die Bewegung der Reinigungsteile (4) unterstützt.

7. Fahrassistenzsystem mit einer Optikeinrichtung und einer Reinigungsvorrichtung nach mindestens einem der vorhergehenden Ansprüche.

8. Fahrassistenzsystem nach Anspruch 7, wobei eine Linse der Optikeinrichtung mit der Reinigungsvorrichtung reinigbar ist.

9. Fahrassistenzsystem nach Anspruch 7 oder 8, weiter mit einer Steuereinheit zur Aktivierung des Reinigungsvorgangs aufgrund manueller Auslösung oder aufgrund einer Schwellwertüberschreitung bzw. Schwellwertunterschreitung.

10. Kraftfahrzeugrückspiegel mit einer Optik und einer Reinigungsvorrichtung nach einem der Ansprüche 1 bis 6.

## Claims

1. A cleaning apparatus for cleaning an optical device (2) of a motor vehicle, wherein the optical device (2) to be cleaned has a curved surface,
at least two cleaning units (1) are comprised by the cleaning apparatus, which, in a working position, are positioned and movable such that the surface can also be cleaned in curved areas by
each cleaning unit (1) having a driving part (3) and a cleaning part (4), wherein the driving part (3) includes an electroactive polymer and can at least partially move the cleaning part (4); at least one holder (5) is comprised by the cleaning apparatus, on which the cleaning units (1) are arranged, wherein the holder (5) is movable between a working position, in which the cleaning units (1) are positioned relative to the optical device (2) in such a way that the cleaning parts (4) can be moved by the driving parts (3) across the surface of the optical device (2) which is to be cleaned, and a resting position, in which the cleaning units (1) are positioned away from the optical device (2), and the holder (5) is ring-shaped; and
the cleaning apparatus is formed such that each cleaning part (4) of the cleaning units (1) is moved across a designated partial area (2a-d) of the surface which is to be cleaned, wherein the partial area (2a-d) may at least partially overlap.

2. The cleaning apparatus according to Claim 1, wherein each driving part (3) moves the corresponding cleaning part (4) along and/or transversely to the longitudinal axis of the cleaning unit (1).

3. The cleaning apparatus according to at least one of the preceding claims, wherein the cleaning part (4) has cleaning bristles, in particular plastic bristles, soft felt and/or wiper lips.

4. The cleaning apparatus according to at least one of the preceding claims, wherein the cleaning part (4) is arranged on at least one end of a cleaning unit (1) which is spatially separated from the holder (5).

5. The cleaning apparatus according to at least one of the preceding claims, wherein the holder (5) is formed from two or more parts.

6. The cleaning apparatus according to at least one of the preceding claims, wherein the holder (5) itself at least partially includes an active material, and thus supports the positioning of the cleaning parts (4) and/or the movement of the cleaning parts (4).

7. A driving assistance system comprising an optical device and a cleaning apparatus according to at least one of the preceding claims.

8. The driving assistance system according to Claim 7, wherein a lens of the optical device is cleanable with the cleaning apparatus.

9. The driving assistance system according to Claim 7 or 8, further comprising a control unit for activating the cleaning process due to manual triggering or due to a threshold value being exceeded or not met.

10. A motor vehicle rear-view mirror comprising an optical system and a cleaning apparatus according to any one of claims 1 to 6.

## Revendications

1. Appareil de nettoyage pour nettoyer un dispositif optique (2) d'un véhicule à moteur, dans lequel
dispositif optique (2) à nettoyer présente une surface incurvée,
au moins deux unités de nettoyage (1) sont comprenant l'appareil de nettoyage, qui sont mises dans une position de travail et déplaçables de sorte que la surface peut être nettoyée même dans les zones incurvées, du fait que
chaque unité de nettoyage (1) possède une pièce d'entraînement (3) et une pièce de nettoyage (4), dans lequel la pièce d'entraînement (3) contient un polymère électroactif et peut mouvoir au moins en partie la pièce de nettoyage (4) ;
l'appareil de nettoyage comprend au moins un support (5), sur lequel les unités de nettoyage (1) sont disposées, dans lequel le support (5) est déplaçable entre une position de travail, dans laquelle les unités de nettoyage (1) sont placées par rapport au dispositif optique (2) de sorte que les pièces de nettoyage (4) peuvent être mues par les pièces d'entraînement (3) au-dessus de la surface à nettoyer du dispositif optique (2), et une position de repos, dans laquelle les unités de nettoyage (1) sont placées à distance du dispositif optique (2),
et le support (5) est conçu avec une forme annulaire ; et
l'appareil de nettoyage est formé de manière à ce
que chaque pièce de nettoyage (4) des unités de nettoyage (1) se déplace au-dessus d'une zone partielle (2a-d) lui étant affectée de la surface à nettoyer, dans lequel les zones partielles (2ad) peuvent se chevaucher au moins en partie.

2. Appareil de nettoyage selon la revendication 1, dans lequel chaque pièce d'entraînement (3) déplace la pièce de nettoyage (4) correspondante le long et/ou en travers de l'axe longitudinal de l'unité de nettoyage (1).

3. Appareil de nettoyage selon au moins une des revendications précédentes, dans lequel la pièce de nettoyage (4) présente poils de nettoyage, notamment poils en matière plastique, feutre doux et/ou lèvres d'essuyage.

4. Appareil de nettoyage selon au moins une des revendications précédentes, dans lequel la pièce de nettoyage (4) est disposée au moins à une extrémité espacée du support (5) d'une unité de nettoyage (1).

5. Appareil de nettoyage selon au moins une des revendications précédentes, dans lequel le support (5) est constitué de deux ou de plusieurs pièces.

6. Appareil de nettoyage selon au moins une des revendications précédentes, dans lequel le support (5) contient lui-même au moins en partie un matériau actif et facilite ainsi le positionnement des pièces de nettoyage (4) et/ou le déplacement des pièces de nettoyage (4).

7. Système d'assistance à la conduite comprenant un dispositif optique et d'un appareil de nettoyage selon au moins une des revendications précédentes.

8. Système d'assistance à la conduite selon la revendication 7, dans lequel une lentille du dispositif optique est nettoyable à l'aide d'appareil de nettoyage.

9. Système d'assistance à la conduite selon la revendication 7 ou 8, comprenant en outre une unité de commande pour activer le processus de nettoyage du fait d'un déclenchement manuel ou en raison du dépassement d'un seuil supérieur ou du dépassement d'un seuil inférieur.

10. Rétroviseur de véhicule comprenant une optique et d'un appareil de nettoyage selon une des revendications 1 à 6.
